# EUROPÄISCHE PATENTANMELDUNG

(11) **EP 1 037 346 A1**
(43) Veröffentlichungstag der Anmeldung: **20.09.2000**
(21) Anmeldenummer: 00104305.8
(22) Anmeldetag: 02.03.2000
(51) Int. Cl.: H02B 1/01, A47B 96/14, A47B 47/02

(54) **Rahmengestell für einen Schrank**

(30) Priorität: 05.03.1999 DE 29904707 U
(71) Anmelder: Schäfer Gehäusesysteme GmbH, 01277 Dresden (DE)
(72) Erfinder: Bovermann, Klaus-Dieter, 35236 Breidenbach (DE); Gerhardus, Hans-Georg, 57562 Herdorf (DE); Reichmann, Hans H., 57299 Burbach-Wahlbach (DE)

(57) **Zusammenfassung**

Die Erfindung betrifft ein Rahmengestell für einen Schrank, insbesondere zum Aufbau eines Schaltschrankes, der mit ein oder zwei Türen, Seitenwänden und Verkleidungen für Deckelund Bodenöffnungen ausgestattet sein soll. Der Rahmen besteht aus einem Bodenrahmen (1), einem Deckrahmen (2) und vier vertikalen Eckprofilen (3).
Das erfindungsgemäße Rahmengestell zeichnet sich gegenüber bekannten Lösungen durch geringe Herstellungskosten, geringes Gewicht, hohe Stabilität und einfache Zerlegbarkeit aus.
Diese Vorteile ergeben sich dadurch, dass alle Profile als dünnwandige geschlossene Hohlprofile ausgebildet sind, die aus jeweils einem mehrfach längsseitig umgebogenen Stahlblechstreifen geformt sind und dass außerdem Profilerweiterungen mit Befestigungslöchern für Verkleidungen und Einbauten vorhanden sind.
Die Hohlprofile von Decken- und Bodenrahmen besitzen in der Tiefe Trennstellen (13), die es erlauben, den fertig montierten Rahmen für Transportzwecke in zwei gleichgroße flache Einheiten zu zerlegen.
Es besteht außerdem die Möglichkeit, angebrachte Türen an beliebiger Stelle mit einem Schloß zu versehen, weil der Schließhebel in jeder Höhenlage in eine dreieckige Einbuchtung im Eckprofil eingreifen kann.

## Beschreibung

Die Erfindung betrifft ein Rahmengestell für einen Schrank, bestehend aus einem Bodenrahmen, einem Deckrahmen und vier vertikalen Eckprofilen, die mit Boden- und Deckrahmen biegesteif verbunden sind.

Derartige Rahmengestelle sind in verschiedenen Bauformen zum Aufbau von Schaltschränken bekannt, die mit ein oder zwei Türen, Seitenwänden und teilweiser oder vollständiger Verkleidung von Deckel- und Bodenöffnungen ausgestattet sind.

Bei einer mehrfach bekannten Bauform werden acht z.T. unterschiedliche Profile über Rahmeneckstücke zusammengefügt und mit diesen bzw. untereinander verschraubt. Die Profile sind aus Aluminium bzw. aus Stahl. Die Konstruktion ist sehr kostenaufwendig und hat nur begrenzte Stabilität in Bezug auf Biegung und Verwindungssteifigkeit. Für den Fall einer aus Transportgründen erforderlichen Zerlegung müssen alle vormontierten Einbauten, z.B. in der 19" -Frontebene, ausgebaut werden.
Das gleiche gilt auch für eine andere Bauform, bei der zwischen Deck- und Bodenrahmen Eckprofile über an diesen Rahmen angeschweißte Steckansätze angebracht und mit diesen verschraubt sind. Im Falle, dass Deck- und Bodenrahmen aus Blechzuschnitten geformt sind und für den Zugang zum Schrankinnenraum noch große Ausschnitte aufweisen müssen, nimmt die Stabilität weiter ab bzw. muß mit hohem Aufwand durch zusätzlich aufgeschweißte Profile erzeugt werden.

Ein weitere Bauform eines bekannten Rahmengestells ist aus verschiedenen Profilen in den Ecken zusammengefügt und verschweißt. Sie kann für den Fall der erforderlichen Zerlegbarkeit nur durch mechanisches Trennen von Rahmenprofilen zerlegt werden.

Es ist die Aufgabe der Erfindung, ein Rahmengestell der eingangs erwähnten Art zu schaffen, das die vorgehend beschriebenen Nachteile der bekannten Bauformen vermeidet, das bei einer hohen Biege- und Verwindungssteifigkeit kostengünstig herzustellen und zu Transportzwecken unter Beibehaltung eines vormontierten frontebenen Ausbaus in einem reduzierten Transportquerschnitt teilweise zerlegbar ist und dabei einfache und vielfältige Möglichkeiten zur universellen Befestigung von Einbauten wie Tiefen- und Querstreben, Kabelführungen, Leuchten, Steckdosenleisten und 19'' -Einbauprofilen sowie von Deck- und Bodenverkleidungspaneelen mit und ohne Zusatzelemente wie Lüfter u.a. aufweist.

Darüber hinaus gilt die Aufgabe, eine einfache Montage von Sockelunterbauten und Deckelaufbauten an Boden- und Deckrahmen sowie die Eingriffsmöglichkeit der Schließhebel von Türen in beliebiger Höhe des Rahmengestells an jeder Türseite zu ermöglichen.

Diese Aufgabe wird dadurch gelöst, dass die Breiten- und Tiefenprofile der Boden- und Deckrahmen und die Eckprofile als dünnwandige geschlossene Hohlprofile ausgebildet sind, die aus jeweils einem mehrfach längsseitig umgebogenen Stahlblechstreifen geformt sind und eine von einer zur Gestellinnenseite gerichteten Profilseite ausgehende Profilerweiterung in Form einer Doppellage der Blechstreifenlängsränder aufweisen, die im Bereich der Doppellage durch Punktschweißen oder Druckfügen verbunden sind, wobei eine oder mehrere Verlängerungen der Blechstreifenlängsränder über die Doppellage hinaus angeformt sein können, in denen wie im Bereich der Doppellage Befestigungsöffnungen eingebracht sind.

Ein solches Rahmengestell weist eine extreme Stabilität in Bezug auf Biegung und Verwindung auf, weil einerseits geschlossene Hohlprofile verwendet und diese unter Beibehaltung des vollen Profilquerschnitts miteinander verschweißt sind. Diese Profile sind relativ dünnwandig und damit leicht und kostengünstig im Rollformverfahren einschließlich aller Lochungen und Abbiegungen von Befestigungsflanschen aus einem Blechstreifen herzustellen.

Die geschlossenen Hohlprofile von Deck- und Bodenrahmen erlauben auch eine Trennmöglichkeit des Gestells in der Tiefe ohne Einbuße der Stabilität, weil innerhalb der Hohlprofile angeordnete passgenaue Stoßverbinder, die zusätzliche Sicherungselemente aufweisen, alle Belastungen spielfrei übertragen.

Es wird auch als besonders rationell und kostensparend vorgeschlagen, Deck- und Bodenrahmen aus dem gleichen Profil herzustellen. Das spart Werkzeugkosten, verdoppelt die Herstellmenge für dieses Profil und erlaubt, die gleichen Stoßverbinder für die Trennstelle zu verwenden. Als besonders vorteilhaft hat es sich erwiesen, das Profil für Deck- und Bodenrahmen als im wesentlichen flach liegendes Rechteckprofil auszubilden, an dem die mit Befestigungsöffnungen ausgestattete Doppellage der Blechstreifen-Längsränder zur Gestellinnenseite gerichtet in Mitte der Profilhöhe angeordnet ist und die die Rahmengestellkante bildenden Profilecken als Fase z.B. unter 45° ausgebildet ist. Diese Fase dient als Selbstzentrierung für Unter- und Aufbauten wie Sockel oder Dach, an denen der Fase entsprechende Zentrierkanten angeordnet sind. In einer Weiterbildung weist das Rahmenprofil an der horizontalen Innenseite einen Z-förmigen Stufenfalz auf, der eine zusätzliche Stabilisierung des Profils insbesondere im Bereich der Anschweißstellen der Eckprofile erbringt.

Eine weitere Versteifung dieser Anschweißstelle der Eckprofile auf den Rahmenprofilen wird dadurch erzielt, dass in diesem Bereich zusätzlich ein vertikal angeordnetes Versteifungsblech eingeschweißt ist.

Die Eckprofile sind ebenfalls in ihrem im wesentlichen für die Stabilität maßgebenden Teil als Rechteckprofil ausgebildet, wobei sich an ihre zur Gestellinnenseite gerichteten Doppellagen in verschiedenen Ausführungsformen Profilverlängerungen anschließen, in denen in vertikalen Reihen Befestigungsöffnungen in einem Rastermaß angeordnet sind.

Dies ist von besonderem Vorteil, weil an diesen Kanten in unterschiedlichen Höhenlagen gemäß der Aufgabenstellung alle Elemente zur Montage und Befestigung von Kabeln, Tiefenund Breitenstreben, Kabelführungsprofilen, Steckdosenleisten, Leuchten usw. zu befestigen sind.

So weist das Eckprofil mindestens eine Profilverlängerung mit einer vertikalen Reihe von Befestigungsöffnungen auf, wobei diese Profilverlängerung innerhalb der Profilschmalseite mit einem Abstand zur Profilinnenseite angeordnet ist.

In einer Weiterbildung liegt die Doppelung in Mitte der Profilschmalseite und die zweifache Profilverlängerung ist jeweils rechtwinklig eine vertikale Nut in Breite der Doppelung bildend abgebogen, wobei die Doppelung und die abgebogenen Profilverlängerungen je eine Reihe vertikaler Befestigungsöffnungen in einem Rastermaß aufweisen.

Wenn ein Rahmengestell mit Türen unterschiedlicher Höhe oder kombiniert mit mehreren Türen in Teilhöhen ausgestattet werden soll, müssen für jede Schließung jeder Tür eine Eingriffsmöglichkeit für einen Schließhebel oder eine Schloßfalle geschaffen werden. Diese Forderung wird in einfachster Weise dadurch erfüllt, dass die Eckprofile an ihren zur Gestellbreite gerichteten Innenseiten durchgehende Einbuchtungen aufweisen, in die z.B. ein Schließhebel eines Schlosses eingreifen kann. Dies gilt selbstverständlich auch nach dem Wechseln des Türanschlags an dem Eckprofil auf der anderen Gestellseite.

Eine Ausführungsform der Erfindung wird anhand der Figuren 1 bis 3 nachstehend näher beschrieben.

Es zeigen:
- Fig. 1: ein Rahmengestell nach der Erfindung in perspektivischer Ansicht
- Fig. 2: einen mittig ausgenommenen Teilschnitt durch die linke vordere Seite des Rahmengestells gem. II-II in Fig. 1
- Fig. 3: Teilschnitte des Eckprofils gern. III-III in Fig. 1 mit Ausführungsformen von Querschnitten des Eckprofils nach der Erfindung.

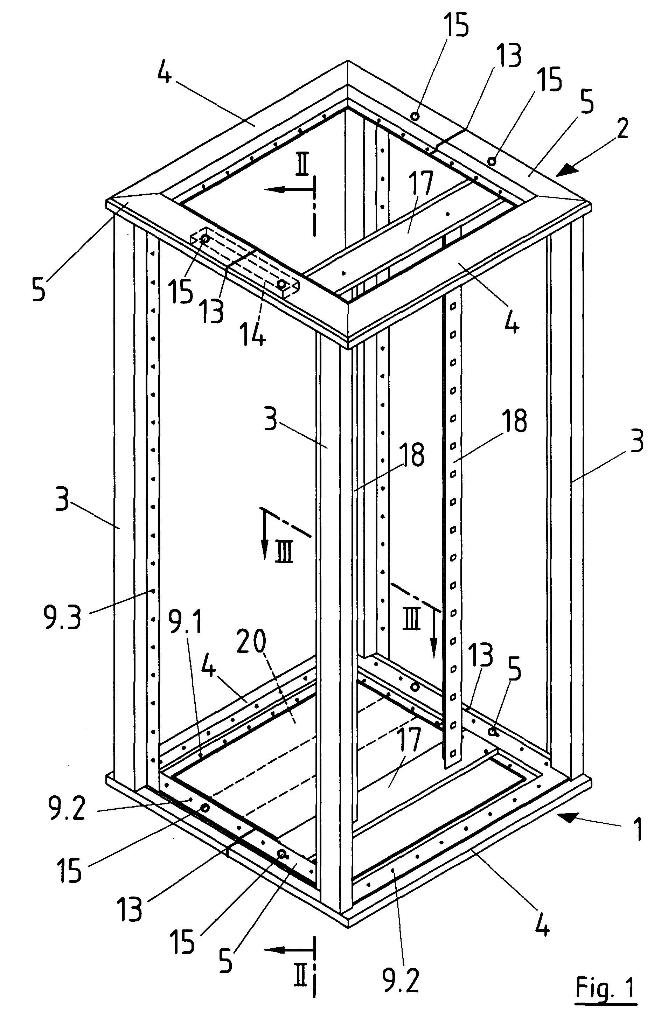

Das Rahmengestell (Fig. 1) besteht aus einem insgesamt mit 1 bezeichneten Bodenrahmen, einem insgesamt mit 2 bezeichneten Deckrahmen und vier Eckprofilen 3. Die Eckprofile 3 sind im Bereich der Ecken von Boden- und Deckrahmen 1, 2 mit diesen verschweißt.

Boden- und Deckrahmen 1, 2 sind aus je zwei Breitenprofilen 4 und Tiefenprofilen 5 mit identischem Profliquerschnitt unter 45° in den Ecken gestoßen zusammengeschweißt. Weiterhin weisen die Tiefenprofile 5 Trennstellen 13 auf, die über innerhalb der Tiefenprofile 5 angeordnete und über Sicherungselemente 15 fixierte Stoßverbinderprofile 14 (nur einmal im Deckrahmen dargestellt) biege- und verwindungssteif, aber demontierbar ausgeführt sind.

Die Eckprofile 3 sind in der Weise in den Rahmenecken positioniert, dass sie bezüglich der Breite mit den Rahmenaußenkanten bündig und bezüglich der Tiefe um das Dickenmaß der nicht dargestellten Front- und Rücktüren von der Rahmenaußenkante zurückversetzt angeordnet sind, damit die Türen mit den Rahmenaußenkanten bündig und zwischen Bodenrahmen 1 und Deckrahmen 2 einliegen. Dies ermöglicht die Verwendung sehr stabiler, aber kostengünstiger Stiftscharniere für die Türen, bei denen durch diese Bauform außerdem sehr montagefreundlich die Anschlagseite der Türen gewechselt werden kann.

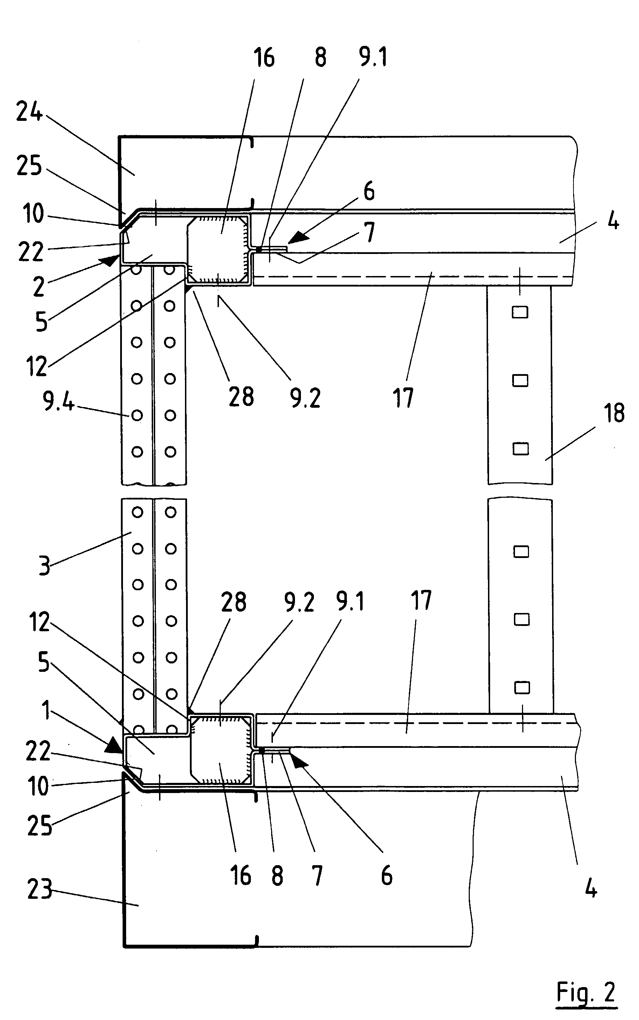

Die Breitenprofile 4 und Tiefenprofile 5 (Fig. 2) weisen als geschlossene dünnwandige Hohlprofile einen im wesentlichen liegenden rechteckigen Querschnitt auf, wobei die Doppellage 7 in der das Profil durch Punktschweißung 8 festigkeitsmäßig geschlossen ist, zur Gestellinnenseite gerichtet ist. In der Doppellage 7 ist auch eine erste Reihe von Befestigungsöffnungen 9.1 zur Befestigung von Verkleidungspaneelen 20 (Fig. 1) und Breitentraversen 17 eingebracht.

Die der Doppellage 7 gegenüberliegende Seite der Breiten- und Tiefenprofile 4, 5 bildet die Rahmenaußenseite, wobei die die horizontalen Gestellkanten darstellende Ecke 10 dieser Profile als Fase 22 von ca. 10 mm Breite unter 45° ausgebildet ist. Sie ermöglicht eine einfache Montage des Rahmengestells auf einem Gestellsockel 23 bzw. von Aufbauten 24, die mit entsprechenden Zentrierkanten 25 ausgestattet sind.

Die horizontale Innenseite von Breiten- und Tiefenprofilen 4, 5 weist einen Stufenfalz 12 in einem Abstand in Größe der Eckprofilbreite von der Rahmenaußenseite auf. Dieser Falz 12 stellt eine den Zusammenbau erleichternde Anlagekante, eine Versteifung der Profile 4, 5 für die dort auftretenden vom Eckprofil ausgehenden Punktbelastungen und eine Möglichkeit für eine versetzt angeordnete Schweißnaht 28 dar. Zwischen Stufenfalz 12 und Doppellage 7 weist die Innenseite von Breiten- und Tiefenprofil 4, 5 eine zweite Reihe von Befestigungsöffnungen 9.2 auf.

Um die Anschweißstelle der Eckprofile 3 weiter zu stabilisieren, ist in die Tiefenprofile 5 in diesem Eckbereich jeweils ein Versteifungsblech 16 eingeschweißt.

Im vorderen Teil des Gestells (Fig. 1) verbindet je eine obere und untere Breitentraverse 17 die vorderen Teile der Tiefenprofile 5, wobei die Breitentraverse 17 als Teil eines modularen Systems von Boden- und Deck-Verkleidungspaneelen 20 an den Doppellagen 7 über die Befestigungsöffnungen 9.1 befestigt sind. Die Breitentraversen 17 können in gleicher Weise (nicht dargestellt) auch die hinteren Teile der Tiefenprofile 5 verbinden.
In der Regel werden sie nur im Frontbereich des Gestells eingesetzt, weil sie dort gleichzeitig auch als Trägerprofile für Profilschienen 18 dienen, an denen die aktiven und passiven Einbauten des Schaltschranks montiert werden. Diese montierte Fronteinheit aus Frontrahmen, Breitentraversen 17 und Profilschienen 18 stellt auch nach Öffnen der Trennstelle 13 eine stabile Transporteinheit dar, was erhebliche Demontage- und Montagekosten im Falle einer erforderlichen Gestelltrennung einspart.

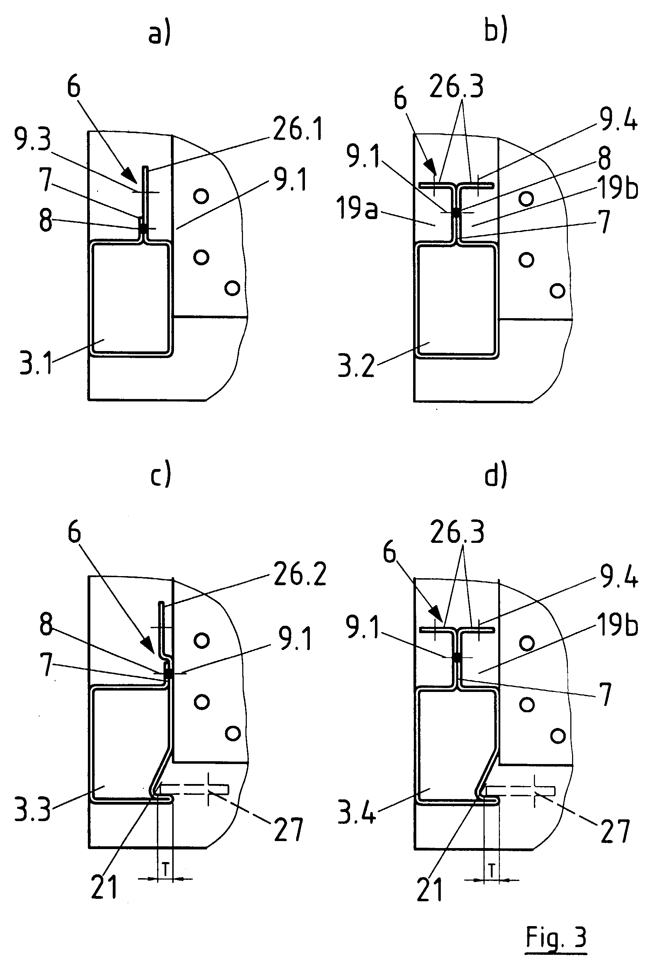

Die Eckprofile 3.1-3.4 (Fig. 3) sind ebenfalls als dünnwandige geschlossene Hohlprofile mit einem im wesentlichen rechteckigen Querschnitt ausgebildet, wobei die Doppellage 7, die ebenfalls die stabilisierende Punktschweißung 8 aufweist, jeweils zur Gestellinnenseite gerichtet ist. Es sind in jedem Fall (Fig. 3, a)-d)) über die Doppellage 7 hinausgehende einfache oder zweifache Profilerweiterungen 26.1-26.3 vorhanden, die jeweils eine Reihe von Befestigungsöffnungen 9.3, 9.4 aufweisen und mit Abstand von den Eckprofillängsseiten innerhalb der Eckprofildickenseite angeordnet sind. Dies erfolgt durch eine mindest Z-förmige Abbiegung der Blechstreifenlängsränder für das Eckprofil, die nach Fig. 3, a), b) und d) als Teil des Rechteckquerschnitts vor der Doppellage 7 und nach Fig. 3, c) hinter der Doppellage liegt.

Die Eckprofile 3.2., 3.4 nach Fig. 3, b) und d) weisen zweifache Profilerweiterungen 26.3 mit zur Gestelltiefe gerichteten Reihen von Befestigungsöffnungen 9.4 und einer Reihe von Befestigungsöffnungen 9.1 im Bereich der Doppellage 7 auf, durch die alle Anforderungen an die Montage von Einbauten einschließlich der Verbindung aneinander gereihter Gestelle erfüllt werden.

Die Eckprofile 3.3, 3.4 nach Fig. 3, c) und d) weisen beispielhaft für alle Profilformen 3.1-3.4 in ihren zur Gestellbreite gerichteten Innenseiten durchgehend profilierte etwa dreieckige Einbuchtungen 21 auf, in die ein Schließhebel 27 eines weiter nicht dargestellten Schlosses einer Tür in beliebiger Gestellhöhe eingreifen kann. Die Einbuchtung 21 wird durch eine 180°-Um-biegung mit der Tiefe 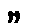 T" des Blechzuschnitts und anschließender zweifacher Abbiegung auf die Breite des Eckprofils 3 erzeugt.

### Bezugszeichenliste

- 1: Bodenrahmen
- 2: Deckrahmen
- 3: Eckprofil
- 4: Breitenprofil
- 5: Tiefenprofil
- 6: Profilerweiterung
- 7: Doppellage
- 8: Punktschweißung
- 9: Befestigungsöffnung
- 10: Profilecke
- 11: Innenseite
- 12: Stufenfalz
- 13: Trennstelle
- 14: Stoßverbinderprofil
- 15: Sicherungselemente
- 16: Versteifungsblech
- 17: Breitentraverse
- 18: Profilschienen
- 19: Falz
- 20: Verkleidungspaneel
- 21: Einbuchtung
- 22: Fase
- 23: Gestellsockel
- 24: Aufbau
- 25: Zentrierkante
- 26: Verlängerung
- 27: Schließhebel
- 28: Schweißnaht
- 29: Stufenfalz
- T: Tiefe

## Patentansprüche

1. Rahmengestell für einen Schrank, bestehend aus einem Bodenrahmen, einem Deckrahmen und vier vertikalen Eckprofilen, die mit Boden- und Deckrahmen biegesteif verbunden sind,
dadurch gekennzeichnet,
dass die Breiten- und Tiefenprofile (4, 5) der Boden- und Deckrahmen (1, 2) und die Eckprofile (3) als dünnwandige geschlossene Hohlprofile ausgebildet sind, die aus jeweils einem mehrfach längsseitig umgebogenen Stahlblechstreifen geformt sind und eine von einer zur Gestellinnenseite gerichteten Profilseite ausgehende Profilerweiterung (6) in Form einer Doppellage (7) der Blechstreifenlängsränder aufweisen, die im Bereich der Doppellage (7) durch Punktschweißen (8) oder Druckfügen verbunden sind, wobei eine oder mehrere Verlängerungen (26) der Blechstreifenlängsränder über die Doppellage (7) hinaus angeformt sein können, in denen wie im Bereich der Doppellage (7) Befestigungsöffnungen (9) eingebracht sind.

2. Rahmengestell nach Anspruch 1,
dadurch gekennzeichnet,
dass die Eckprofile (3) an einer ersten Profilseite die zur Gestelltiefe gerichtete Profilerweiterung (6) und an einer zweiten Profilseite eine zur Gestellbreite gerichtete etwa dreieckige Einbuchtung (21) von ca. 8 mm Tiefe (T) aufweisen.

3. Rahmengestell nach Anspruch 1,
dadurch gekennzeichnet,
dass die Breiten- und Tiefenprofile (4, 5) von Boden- und Deckrahmen (1, 2) die gleiche Profilform aufweisen, die Doppellage (7) in Mitte der Profilhöhe zwei gleich tiefe Falze (19a, 19b) bildend angeordnet ist und unter 45° geteilt in den Ecken zusammenstoßend miteinander verschweißt jeweils Boden- und Deckrahmen (4, 5) bilden und diese mit den Eckprofilen (3) verschweißt sind.

4. Rahmengestell nach den Ansprüchen 1 bis 3,
dadurch gekennzeichnet,
dass das Breiten- und Tiefenprofil (4, 5) eine im wesentlichen rechteckige Form hat, wobei die die Rahmengestellkanten bildende Profilecke (10) als 45°-Fase (22) mit einer Breite von 10-20 mm ausgebildet ist und die horizontale Innenseite des Profils einen Z-förmigen Stufenfalz (29) von ca. 10 mm Höhe in einem Abstand in Größe der Eckprofilbreite von der Rahmenaußenkante und mindestens eine Reihe von Befestigungsöffnungen (9.2) auf weist.

5. Rahmengestell nach Anspruch 1 und einem oder mehreren der vorher genannten Ansprüche,
dadurch gekennzeichnet,
dass im Bereich der Anschweißstelle der Eckprofile (3) an Boden- und Deckrahmen (1, 2) in die Tiefenprofile (5) jeweils ein vertikal angeordnetes Versteifungsblech (16) eingeschweißt ist.

6. Rahmengestell nach Anspruch 1 und einem oder mehreren der vorher genannten Ansprüche,
dadurch gekennzeichnet,
dass die Breiten-Tiefen- und Eckprofile (3, 4, 5) durch Rollformen aus einem Blechstreifen hergestellt sind.

7. Rahmengestell nach Anspruch 1 und einem oder mehreren der vorher genannten Ansprüche,
dadurch gekennzeichnet,
dass die Tiefenprofile (5) von Boden- und Deckrahmen (1, 2) Trennstellen (13) aufweisen, die mittels innerhalb der Tiefenprofile (5) angeordneter Stoßverbinderprofile (14) und Sicherungselementen (15) biege- und verwindungssteif, aber demontierbar ausgeführt sind.

8. Rahmengestell nach Anspruch1 und einem oder mehreren der vorher genannten Ansprüche,
dadurch gekennzeichnet,
dass die front- und/oder rückseitigen Teile der getrennten Tiefenprofile (5) über je eine obere und untere Breitentraverse (17) mittels Befestigungsmitteln in den Befestigungsöffnungen (9.1) miteinander verbunden sind und zwischen den beiden Breitentraversen (17) vertikale gelochte Profilschienen (18), z.B. als 19'' -Montageebene, verschraubt sind, die mit dem Frontrahmen aus Eck- und Breitenprofilen (3, 4) eine stabile Transporteinheit bilden.

9. Rahmengestell nach Anspruch 8,
dadurch gekennzeichnet,
dass die Breitentraversen (17) Teil eines modularen Systems von Boden- und Deck-Verkleidungspaneelen (20) sind.
